# EUROPEAN PATENT APPLICATION

(11) **EP 3 290 763 A1**
(43) Date of publication of application: **07.03.2018**
(21) Application number: 16186103.4
(22) Date of filing: 29.08.2016
(51) Int. Cl.: F16L 1/24, H02G 1/10, F16L 1/12, H02G 9/12

(54) **APPARATUS FOR JACKETING A CABLE**

(71) Applicant: Siemens Aktiengesellschaft, 80333 München (DE)
(72) Inventor: Soerensen, Johnny, 6920 Videbæk (DK)

(57) **Abstract**

The invention relates to an apparatus (10) for jacketing a cable (30) such that the jacketed cable (31) can be used for offshore applications. The apparatus (10) comprises a supply unit (11) for supplying a jacket element (40) from a storage unit (51), a picking unit for picking the jacket element (40) and position the picked jacket element (40) close to the portion of the cable (30) to be jacketed, and a fixing unit for fixing the picked jacket element (40) to the cable. Furthermore, the invention relates to a vessel comprising such an apparatus (10), wherein the apparatus (10) is mounted on deck of the vessel. Finally, the invention relates to a method of manufacturing a jacketed cable (31) such that it can be used for offshore applications.

## Description

The invention relates to an apparatus for jacketing a cable such that the jacketed cable can be used for offshore applications. Furthermore, the invention relates to a vessel comprising such an apparatus. Finally, the invention relates to a method of manufacturing a jacketed cable such that it can be used for offshore applications.

Cables used for offshore installations are typically prepared as to allow the cable to have a sufficient density that will allow the cable to easily sink to or remain placed at the seabed. Armored cables, e.g. metal armor, normally have a high density and thus meet this requirement, but are very expensive. Alternatively, weights can be mounted on the cable to provide the necessary density, and ensure that the cable remains placed at the seabed after having been laid out, e.g. using a vessel. The cable may even have been plowed into the seabed to protect it and secure its position even further. In particular hollow cables, e.g. for fluid or gas transport, may have a density less than water, thus causing the cables to float if not secured properly.

Preparing a cable such that it can be used for offshore applications, i.e. such that it can be used in the water, is a slow and expensive process. In the prior art, preparation of a cable for offshore applications is carried out by protecting a conventional cable, e.g. an onshore cable, by concrete elements which are arranged around the cable in such a manner that the concrete elements protect and cover the cable, and provide an extra weight, i.e. an increase in density, to secure that the cable remains positioned on the seabed. The covering of the cable by concrete elements is conventionally done manually. Therefore, this process is time consuming and, hence, expensive. As a consequence, typically, only selected sections of an offshore cable are protected by such a protective cover. Specific regions, which are preferably covered, are, for instance, regions with increased ship traffic or regions where the seawater is quite shallow. In such areas it is particularly important that the cable remains in or on the seabed, e.g. to protect it from being torn apart by passing traffic.

Therefore, it would be desirable to have a concept how to provide a jacketed cable in a less costly process such that jacketed cables could be used in broader ranges and to a greater extent offshore.

Such a concept is disclosed in the independent claims. Advantageous modifications and variations thereof are disclosed into dependent claims.

It is to be understood that jacketing a cable according to the present invention, is not necessarily applicable to the full length of an offshore cable, but could also be used on parts of the cable, i.e. one or more sections of the cable could be jacketed according to the method described herein. By example, a part(s) of the offshore cable could be jacketed according to the method herein described, and the other part(s) be e.g. laid directly on the seabed or plowed into the seabed or secured on the seabed by other means.

According to the invention, there is provided an apparatus for jacketing a cable such that the jacketed cable can be used for offshore applications, wherein the apparatus comprises a supply unit for supplying a jacket element from a storage unit, a picking unit for picking the jacket element and position the picked jacket element close to the portion of the cable to be jacketed, and a fixing unit for fixing the picked jacket element to the cable.

A key aspect of the present invention is that instead of manually covering the cable with, for example, half shells made of concrete and attaching these elements to the cables manually, it is provided herewith an apparatus for carrying out this process and, therefore, substituting the process which has been carried out manually until now. It is stressed that the invention does not just lie in the idea to automate and industrialize a process which has been performed manually until now, but that also a specific realization of such an apparatus is disclosed.

The apparatus basically consists of a supply unit, a picking unit and a fixing unit. These different units all work together and are able to provide a jacketed cable automatically, based on just the pure, unjacketed cable and the jacket elements.

Exemplarily, picking and positioning of a jacket element is carried out by a sort of a robot arm or gripping unit, which is not only able to grip and grasp the jacket element, but also to move it from one point to another point.

Note that picking and positioning of the jacket element may be carried out by one single device.

The picking unit is suitable for positioning the picked jacket element close to the portion of the cable which is to be jacketed. In this context, "close" may relate to a distance of a few centimeters, such as less than ten centimeters. The notion "close" also includes positioning the jacket element in immediate vicinity to the cable to be jacketed, such that the jacket element and the cable even is in contact with each other.

It is even considered that picking, positioning and fixing of the jacket element is carried out by one single device. Again, a possible realization to carry out these process steps is a robot arm or gripping unit.

In a particular embodiment of the invention, not only one jacket element, but several jacket elements are attached to a certain section of the cable to be jacketed. As an example, a first jacket element having the shape of a half shell and a second jacket element also having the shape of a half shell are attached and fixed to a certain portion, or section, of the cable to be jacketed. By arranging these two half shells such that they cover substantially the entire outer surface of the section of the cable to be jacketed, a complete protection of the cable is reached by a simple process.

Note, however, that a key aspect of jacketing the cable is to provide a high density of the cable such that it is ensured that the jacketed cable remains at the seabed and does not rise to the sea level, for instance. To achieve this purpose, a full cover of the cable by jacket elements is not necessary. In view of flexibility of the cable and bending capabilities, it might even be advantageous to only cover a portion of the outer surface of the cable by jacket elements.

Therefore, in an advantageous embodiment of the invention, the cable is jacketed in segments. In other words, it is preferred to leave a gap between adjacent segments in order to allow the jacketed cable to bend to a certain degree.

The length of the jacket elements could exemplarily be in the range of 0.5 meter and 5 meter. The gaps between adjacent jacket elements could exemplarily be in the range of 0.2 meter to 2 meter.

Generally, longer gaps are preferred for regions wherein the risk of floating of the cable is reduced, compared to regions with e.g. high ship traffic. In the latter region, a jacketed cable with shorter gaps are advisable.

In the case of several jacket elements being used for jacketing a certain section of the cable, these jacket elements can be picked, positioned and fixed to the cable by one supply unit, one picking unit and one fixing unit in sequences. Alternatively, the apparatus may comprise a further supply unit, a further picking unit and a further fixing unit for enabling a simultaneous picking, positioning and fixing of the further jacket element to the section of the cable to be jacketed.

An advantage of the provision of such a further supply unit, further picking unit and further fixing unit is that the speed with which the cable can be jacketed could be doubled compared to a sequential jacketing of the cable.

In this context, "simultaneously" means "at the same" or "substantially at the same time".

Even in the case that only one jacket element is attached to a specific portion of the cable, the provision of several supply units, picking units and fixing units can be advantageous.

Note that the cable which is suitable to be jacketed by the described apparatus may be suitable to transmit electricity, but it may also be suitable to transmit data or even a fluid, such as oil or gas. It is stressed that the present invention is relatively independent on the type of cable and the medium or signals which are transmitted by the cable. The present concept is applicable to all kinds of cables or tubes or pipes which can be jacketed and which are used for offshore applications.

Thus, the invention is deemed to also relate to an apparatus of jacketing a tube such that the jacketed tube can be used for offshore applications. Likewise, the invention is also deemed to also relate to an apparatus of jacketing a pipe such that the jacketed pipe can be used for offshore applications.

"Offshore" does not only include marine environments, but also lakes, rivers and the like.

In an embodiment of the invention, the apparatus further comprises a control unit for controlling the layout of the jacketed cable.

In a first alternative, the layout of the jacketed cable implies the layout of the jacketed cable directly into the sea. Therefore, the apparatus is advantageously placed on deck of a vessel. An advantage of laying the jacketed cable directly out into the sea is that the jacketed cable does not need to be stored temporarily at a storage site and does not need to be transported by a ship to the site offshore where it is needed.

In a second alternative, the layout of the jacketed cable occurs in a manufacturing site, such as a factory hall. Then, the jacketed cable may be laid out in a transportation device, such as a cable drum. The advantage of this method is that jacketing of the cable is carried out in a safe and protected environment, being independent e.g. from the often-times harsh ambient weather conditions offshore.

In another embodiment of the invention, the material of the jacket element is chosen such that the density of the jacketed cable is higher than the density of water.

If one of the outsets of placing the jacket element to the cable is to increase the weight of the cable section, then in principle any material that would provide a sufficient high density to the cable, or cable section, could be used according to an embodiment of the invention. By high density is meant a density of the cable section that is higher than water, i.e. the cable, or cable section, would not float in water after the jacket element(s) have been placed.

In this context, the density of the jacketed cable relates to the potential of the jacketed cable to generate lift when it is submerged into the water. Thus, it is aimed to provide the jacketed cable with a sufficiently high density such that it safely remains submerged in the water and does not emerge from the seabed to the sea level, i.e. out of the water.

An example of a suitable material of which the jacket element is advantegously made is concrete. Concrete has the advantage that it is inexpensive, well proven, durable and heavy. The combination of all these properties make concrete to a preferred choice for the material of the jacket elements. Naturally, the jacket elements need not be made of 100% concrete, but it may also be a mix of concrete and different other materials.

The supply unit has the function to transport the jacket element from a storage site to the cable which shall be jacketed, in particular to the section of the cable where the jacket elements shall be attached to. In practice, the storage unit may comprise at least one magazine for accommodating a plurality of jacket elements and the supply unit may comprise a conveyor belt or similar to transport the jacket elements from the storage unit, e.g. the magazines, to the position where the jacketing of the cable takes place in an efficient manner.

The invention is also directed towards a vessel comprising such an apparatus. Basically, this apparatus is mounted on the deck of the vessel. This has the advantage that the different components, namely the conventional, unjacketed cable and the plurality of jacket elements just need to be transported from the harbor or the shore general to the site where the cable needs to be put into the water and that the process of jacketing the cable is completely made where it is need to take place. A vessel with an apparatus for jacketing a cable might therefore be described as a "just in time production" of the jacketed cable.

The invention is further related to method of manufacturing a jacketed cable such that it can be used for offshore applications. The method comprises the following steps:
A. Supplying the jacketed element by means of a supply unit,
B. Picking the jacket element by means of a picking unit and position the picked jacket element close to the portion of the cable to be jacketed, and
C. Fixing the picked jacket element to the cable by means of a fixing unit.

Basically, this method describes an automated way of jacketing a cable. The method benefits from several units of the apparatus described above, namely the supply unit, the picking unit and the fixing unit. Note that the different method steps needs to be worked through step by step, i.e. sequentially. However, the several units may, for instance, be realized as one single device.

In an embodiment of the inventive method, the method comprises the further step of laying out, in other words paying out, the jacketed cable directly into the sea.

This has the advantage that placing and storing the jacketed cable is not necessary, but, moreover, that the jacketed cable is directly disposed at the site where it is proposed to finally be used.

Embodiments of the invention are now described, by way of example only, with reference of the accompanying drawings, of which:
- Figures 1 and 2: show an apparatus for jacketing a cable;
- Figures 3 to 10: show the method of jacketing a cable by such an apparatus;
- Figure 11: shows an exemplary embodiment of a jacketed cable; and
- Figure 12: shows a vessel comprising an apparatus for jacketing a cable.

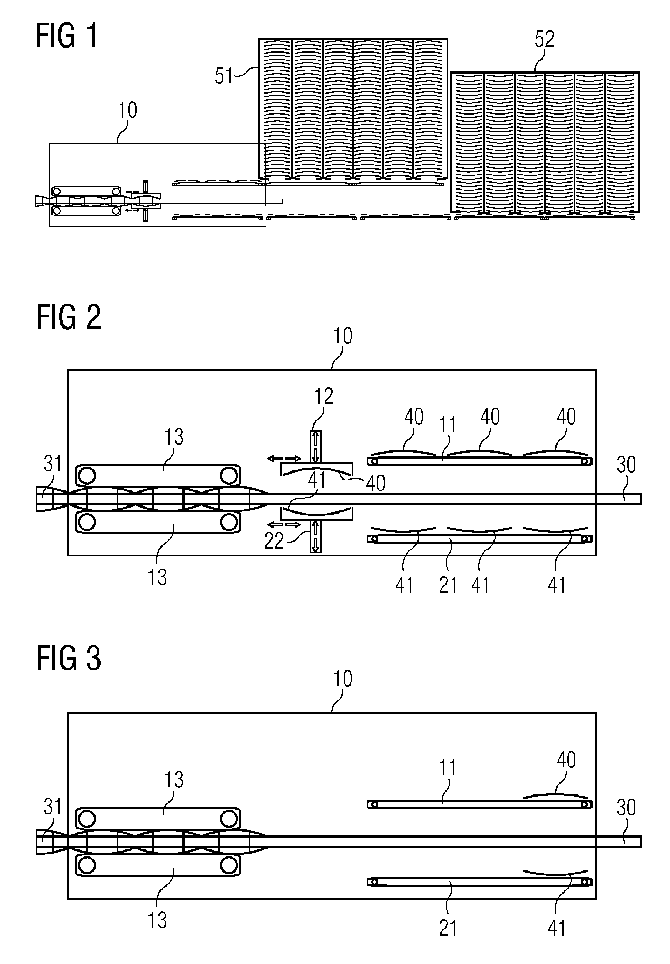

Figure 1 shows in an overview picture an apparatus 10 which is suitable for jacketing a cable such that the jacketed cable can be used for offshore applications. Figure 1 also shows a storage unit 51 and a further storage unit 52 which are connected to the apparatus 10. This storage unit 51 is filled with a plurality of jacket elements. Due to the design and the function of the storage unit 51, the storage unit 51 may also be described as a magazine. Likewise, the further storage unit 52 is also packed with jacket elements and the shape and design of the further storage unit 52 also resembles a magazine. The storage unit 51 and the further storage unit 52 have the function to act as a supply for the apparatus 10. In other words, the jacket elements and the further jacket elements can be seen as input material for the apparatus 10.

Figure 2 is a close-up view of the apparatus 10. It can be discerned that the apparatus 10 comprises a supply unit 11, a picking/fixing unit 12 and a control unit 13. Also the cable 30, which is a pure, conventional cable, entering the apparatus 10 from the right side and leaving the apparatus 10 at the left side as a jacketed cable 31, can be seen in Figure 2. Note that in the exemplary embodiment as illustrated in Figures 1 and 2, the supply unit 11and the picking/fixing unit 12 are doubled such that there also exist a further supply unit 21 and a further picking/fixing unit 22. In other words, these two basic components of the apparatus, namely the supply unit 11 and the picking/fixing unit 12, are mirrored or doubled within the apparatus 10. An advantage of having each basic unit two times is that the cable 30 can be jacketed by jacket elements and further jacket elements simultaneously. This leads to an increased process velocity.

Figures 3 to 10 now describe in detail and step by step how the jacketed cable can be manufactured by the invented apparatus.

Figure 3 shows a first step, wherein a jacket element 40 and a further jacket element 41 are supplied. The jacket element 40 is supplied by the supply unit 11. Likewise, the further jacket element 41 is supplied by the further supply unit 21. As an example, the supply unit 11 and the further supply unit 21 may be realized and designed as conveyor belts reaching from the storage unit 51 and the further storage unit 52, respectively, to the apparatus 10.

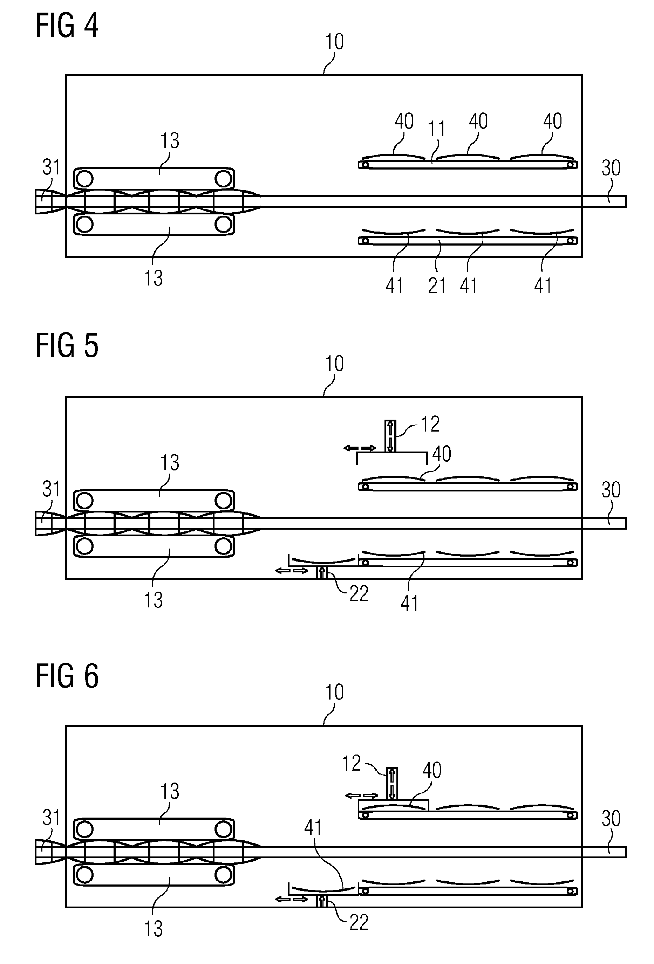

Figure 4 shows the situation where three jacket elements 40 are supplied by the supply unit 11 and are made ready for processing. Likewise, three further jacket elements 41 are supplied by the further supply unit 21 and are also made ready for further processing.

Figure 5 shows the step where the picking/fixing unit 12 and the further picking/fixing unit 21 are placed into position for picking one of the jacket elements 40 and one of the further jacket elements 41, respectively. Note that in this embodiment of the apparatus 10, the picking/fixing unit 12 is designed such that it can change position both in lateral and perpendicular direction. In other words, the picking unit is not only able to pick the jacket element, but is also able to position and replace the jacket element from one position to another position. Exemplarily, the picking/fixing unit 12 may be realized as a robot arm. The same applies to the further picking/fixing unit 22, which is also able to carry out both translatory movements in horizontal and in vertical direction.

Figure 6 shows the situation where the picking/fixing unit 12 is about to pick a jacket element 40 and the further picking/fixing unit 22 has already picked one further jacket element 41 and moved it from the further supply unit 21 towards the control unit 13.

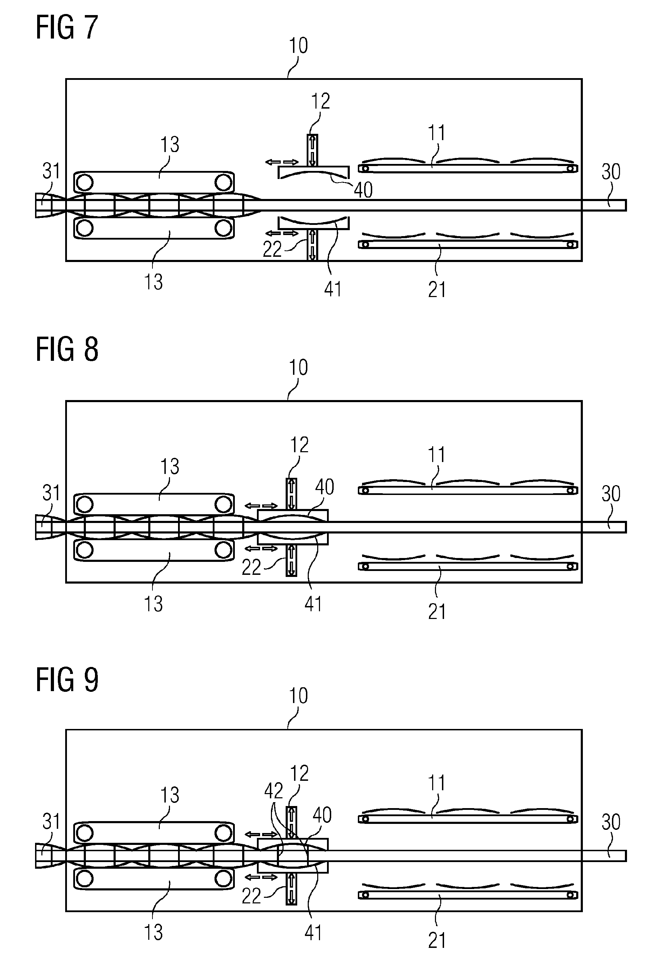

Figure 7 illustrates the step where both jacket elements, the jacket element 40 and the further jacket element 41, are brought into position relative to the cable 30 to be jacketed, in particular relative to the section of the cable 30 which shall be jacketed.

In Figure 8, the jacket element 40 and the further jacket element 41 are brought into contact with the section of the cable 30 to be jacketed. Figure 8 illustrates the status just prior of fixing the jacket element 40 and further jacket element 41 to the cable 30 to be jacketed.

The actual fixing step is shown in Figure 9 where both elements, the jacket element 40 and the further jacket element 41, are tied by a pair of straps 42.

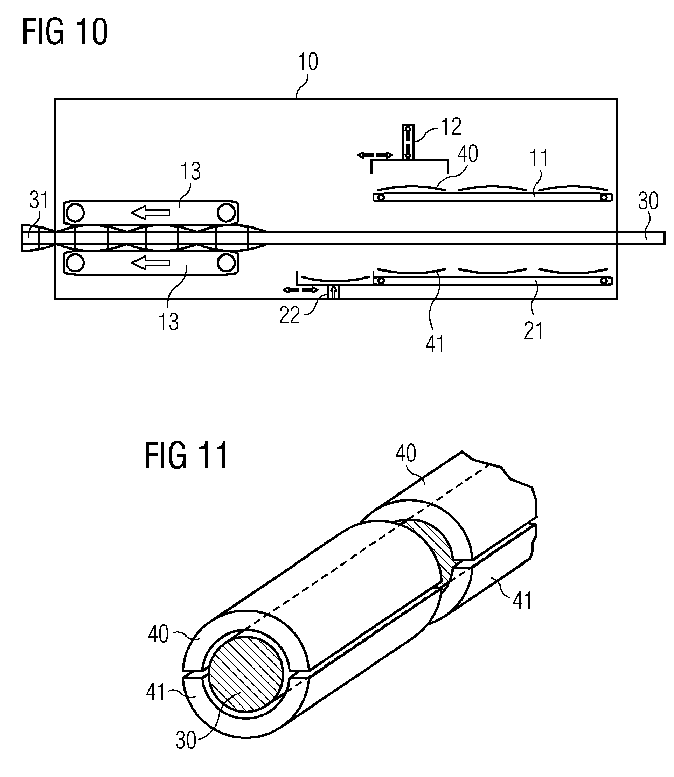

Figure 10 illustrates the process how the jacketed cable 31 is controlled by the control unit 13. The control unit 13 comprises two caterpillar units, which are able to regulate the speed and orientation of the jacketed cable 31 exiting the apparatus 10.

Figure 10 also illustrates that the picking/fixing unit 12 and the further picking/fixing unit 22 move towards the supply unit 11 and the further supply unit 21, respectively, in order to pick the next jacket element and the next further jacket element, respectively.

Figure 11 is a perspective view of an exemplary jacketed cable 31. The jacketed cable 31 comprises a cable 30 which is covered or surrounded or embraced by a jacket element 40 and a further jacket element 41. Both the jacket element 40 and the further jacket element 41 are designed and configured as half shells. This design enables at the same time a nearly complete covering of the cable 30 and an easy and uncomplicated processing of covering the cable 30. As the cable and, in particular, also the jacketed cable need to feature a certain flexibility and as the jacket elements are typically not flexible, it is advantageous to jacket the cables in segments. Thus, it is preferred to leave a certain gap between the segments in order to allow the jacketed cable to be bent to a certain degree. This is advantageous when placing the jacketed cable into the seabed.

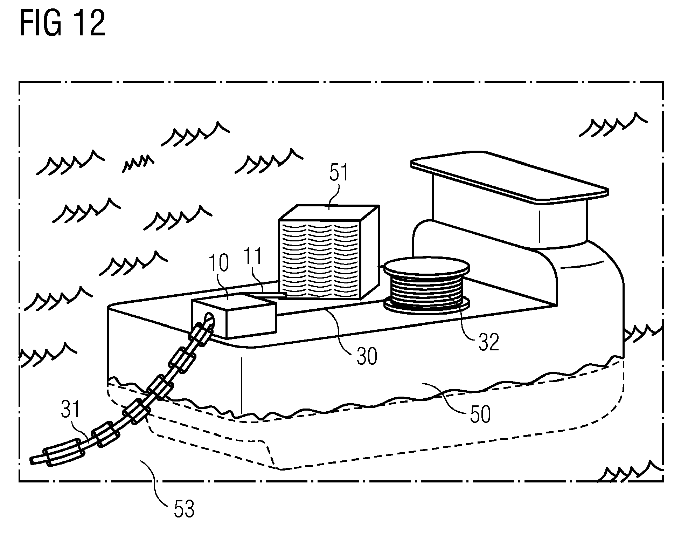

Finally, Figure 12 discloses and illustrates a vessel 50 comprising such an apparatus 51 on its deck. The vessel might be a jack-up vessel which is commonly used for installing a wind turbine or foundation works for converter stations in a wind farm and the like. Such a vessel, however, can also be used in high sea for laying out a cable over great distances.

In Figure 12 it can be seen that not only the apparatus 10 is placed on the deck of the vessel, but also a storage unit 51, which is designed as a magazine and connected to the apparatus 10 via the supply unit 11, realized as a conveyor belt. It can also be seen that on the deck of the vessel 50 a huge cable drum 32 is present where the cable 30 which needs to be jacketed is arranged.

Figure 12 finally discloses that a conventional cable 30 enters the apparatus 10 and a jacketed cable comprising the jacket elements covering the cable exits the apparatus 10. In other words, the jacketed cable 31 is immediately laid out into the sea 53. This can be described as "just in time processing" of the jacketed cable. In other words, the cable is jacketed in an automated way on deck of the vessel 50.

## Claims

1. Apparatus (10) for jacketing a cable (30) such that the jacketed cable (31) can be used for offshore applications, the apparatus (10) comprising
- a supply unit (11) for supplying a jacket element (40) from a storage unit (51),
- a picking unit for picking the jacket element (40) and positioning the picked jacket element (40) close to the portion of the cable (30) to be jacketed, and
- a fixing unit for fixing the picked jacket element (40) to the cable.

2. Apparatus (10) according to claim 1,
wherein the picking and positioning of the jacket element (40) is destined to be carried out by one single device.

3. Apparatus (10) according to claim 1,
wherein the picking, positioning and fixing of the jacket element (40) is carried out by one single device.

4. Apparatus (10) according to one of the preceding claims, wherein the apparatus (10) further comprises a control unit (13) for controlling the layout of the jacketed cable (31), e.g. directly into the sea (53) or in a transportation device.

5. Apparatus (10) according to one of the preceding claims, wherein the apparatus (10) comprises
- a further supply unit (21) for supplying a further jacket element (41) from a further storage unit (52), and
- a further picking unit for picking the further jacket element (41) and position the picked further jacket element (41) close to the portion of the cable (30) to be jacketed, and
- a further fixing unit for fixing the picked further jacket element (41) to the cable (30),
and wherein the jacket element (40) and the further jacket element (41) are supplied, picked, positioned and fixed to the cable substantially simultaneously.

6. Apparatus (10) according to one of the preceding claims, wherein
- the jacket element (40) has the shape of a half shell and is able to jacket half of the portion of the cable (30) to be jacketed.

7. Apparatus (10) according to one of the preceding claims, wherein the cable (30) is suitable to transmit electricity, data or a fluid such as oil or gas.

8. Apparatus (10) according to one of the preceding claims, wherein the material of the jacket element (40) is chosen such that the density of the jacketed cable (31) is higher than the density of water.

9. Apparatus (10) according to one of the preceding claims, wherein the jacket element (40) is substantially made of concrete.

10. Apparatus (10) according to one of the preceding claims, wherein the supply unit (11) comprises at least one conveyor belt (54).

11. Apparatus (10) according to one of the preceding claims, wherein the storage unit (51) comprises at least one magazine for accommodating a plurality of jacket elements (40).

12. Apparatus (10) according to one of the preceding claims, wherein the cable (30) is jacketed in segments.

13. Vessel (50) comprising the apparatus (10) according to one of the preceding claims, wherein the apparatus (10) is mounted on deck of the vessel (50).

14. Method of manufacturing a jacketed cable (31) such that it can be used for offshore applications, the method comprising the steps of:
- supplying the jacket element (40) by means of a supply unit (11),
- picking the jacket element (40) by means of a picking unit and positioning the picked jacket element (40) close to the portion of the cable (30) to be jacketed,
- fixing the picked jacket element (40) to the cable (30) by means of a fixing unit.

15. Method of laying out a jacketed cable (31) into the sea (53),
wherein the method comprises manufacturing the jacketed cable (31) according to claim 13 and comprises the further step of laying out the jacketed cable (31) directly into the sea (53).
